(19) Europäisches Patentamt / European Patent Office / Office européen des brevets

(11) **EP 3 671 319 B1**

(12) **FASCICULE DE BREVET EUROPEEN**

(45) Date de publication et mention
de la délivrance du brevet:
**08.09.2021 Bulletin 2021/36**

(51) Int Cl.:
**G02B 27/20** *(2006.01)* **G02B 30/27** *(2020.01)*

(21) Numéro de dépôt: **19218257.4**

(22) Date de dépôt: **19.12.2019**

(54) **DISPOSITIF D'AFFICHAGE D'IMAGES STÉRÉOSCOPIQUES**

VORRICHTUNG ZUR ANZEIGE VON STEREOBILDERN

DEVICE FOR DISPLAYING STEREOSCOPIC IMAGES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2018 FR 1874084**

(43) Date de publication de la demande:
**24.06.2020 Bulletin 2020/26**

(73) Titulaire: **COMMISSARIAT À L'ÉNERGIE
ATOMIQUE ET AUX
ÉNERGIES ALTERNATIVES
75015 Paris (FR)**

(72) Inventeur: **JOLY, Pierre
38054 GRENOBLE Cedex 09 (FR)**

(74) Mandataire: **Le Goaller, Christophe
Innovation Competence Group
310 avenue Berthelot
69372 Lyon Cedex 08 (FR)**

(56) Documents cités:
**WO-A1-2016/102338    US-A1- 2014 118 824**

• **SON J-Y ET AL: "CHARACTERISTICS OF PIXEL
ARRANGEMENTS IN VARIOUS RHOMBUSES
FOR FULL-PARALLAX THREE-DIMENSIONAL
IMAGE GENERATION", APPLIED OPTICS,
OPTICAL SOCIETY OF AMERICA,
WASHINGTON, DC; US, vol. 45, no. 12, 20 avril
2006 (2006-04-20), pages 2689-2696,
XP001242825, ISSN: 0003-6935, DOI:
10.1364/AO.45.002689**

EP 3 671 319 B1

## Description

### DOMAINE TECHNIQUE

Le domaine technique de l'invention est l'affichage d'une image tridimensionnelle (3D), selon un principe permettant à un utilisateur une perception 3D à partir d'images bidimensionnelles.

### ART ANTERIEUR

Les principes d'affichage d'une image tridimensionnelle, ou plus précisément perçue comme tridimensionnelle par le cerveau, sont assez anciens. Parmi les premières méthodes mises en œuvre, celles nécessitant le recours à des lunettes spécifiques sont assez usuelles. Il s'agit par exemple de lunettes présentant des filtres colorés ou des filtres polarisants. Ces lunettes permettent la formation de vues stéréoscopiques d'une scène.

D'autres systèmes, dits autostéréoscopiques, permettent de percevoir un relief à l'aide d'images générées par un dispositif d'affichage. Dans ce type de dispositif, un écran est optiquement couplé à un élément de séparation optique. Ce dernier permet de projeter, sur les yeux d'un utilisateur, des vues différentes d'une même scène. L'élément de séparation optique peut notamment être un réseau lenticulaire. L'écran est alors couplé à des microlentilles convergentes, par exemple sphériques. Ces dernières permettent de dévier la lumière générée par les pixels de l'écran, de façon à former, au niveau des yeux d'un utilisateur un couple d'images stéréoscopiques. Une vue est formée au niveau d'un œil, tandis qu'une autre vue est formée au niveau d'un autre oeil, les vues ainsi formées formant le couple stéréoscopique. De tels dispositifs, basés sur un couplage entre un écran et une matrice de microlentilles, sont par exemple décrits dans EP0697161. L'intérêt des systèmes d'affichage autostéréoscopiques est qu'ils ne nécessitent pas l'utilisation de lunettes spécifiques. Les microlentilles sont assemblées selon un réseau de microlentilles, ou réseau lenticulaire, usuellement désigné par le terme "Micro Lens Array".

Une contrainte liée à l'utilisation de microlentilles, ou d'autres types d'éléments de séparation optique, est l'apparition de phénomènes de Moiré, qui peuvent conduire à l'apparition de franges d'interférence dans l'image vue par l'utilisateur. Cela est dû à la superposition de deux structures périodiques, à savoir les pixels de l'écran et la matrice de microlentilles. La publication Son J.Y "Characteristics of pixel arrangements in various rhombuses for full-parallax three-dimensional system"; Applied Optics, Vol. 45, No. 12, April 2006, adresse ce problème, et propose un réseau de microlentilles formant des losanges.

Une autre contrainte liée à la conception de dispositifs d'affichage autostéréoscopiques est le champ d'observation utile, ce dernier correspondant à l'ensemble des vues simultanément formées par le dispositif. Il s'agit d'une zone spatiale, usuellement désignée par le terme "head box", dans laquelle les yeux d'un utilisateur doivent être situés pour engendrer une perception d'une image tridimensionnelle. Généralement, le champ d'observation utile décrit un carré, de telle sorte que la dimension maximale, parallèlement à l'écart pupillaire d'un observateur, est sensiblement égale à la dimension maximale perpendiculairement à l'axe définissant l'écart pupillaire.

Le document WO98/20392 décrit le recours à un réseau de microlentilles dont chaque lentille est de forme triangulaires, rectangulaire ou hexagonale, la forme hexagonale étant présentée comme préférée. En effet, il est considéré que la forme hexagonale présente un ratio favorable entre la surface et la distance séparant le centre de l'hexagone et le point le plus éloigné de l'hexagone. Ainsi, des microlentilles de forme hexagonale sont supposées conférer de meilleures performances optiques, en particulier une profondeur de champ plus importante. Le dispositif décrit dans ce document permet d'obtenir une head box de forme rectangulaire, dont la longueur est bien supérieure à la hauteur.

L'inventeur a conçu un dispositif d'affichage permettant d'optimiser le champ d'observation utile, de telle sorte que ce dernier soit mieux adapté au débattement spatial des yeux d'un utilisateur, tout en réduisant le risque de formation d'effets de Moiré.

### EXPOSE DE L'INVENTION

Un premier objet de l'invention est un dispositif d'affichage, comportant un support d'image formé d'une matrice de pixels, chaque pixel s'étendant autour d'un centre, la matrice étant telle que des centres de pixels s'étendent selon des lignes, parallèlement à un premier axe longitudinal et selon des colonnes, parallèlement à un premier axe latéral, le support d'image étant disposé face à un réseau optique, le dispositif étant tel que :

- le support d'image est segmenté en zones élémentaires, à chaque zone élémentaire correspondant un nombre prédéterminé de pixels adjacents, chaque zone élémentaire étant configurée pour afficher une image élémentaire ;

- le réseau optique comporte des éléments de séparation optique, chaque élément de séparation optique étant configuré pour projeter les pixels dans un plan image, distant du support d'image, et parallèle à ce dernier ;

- chaque zone élémentaire forme une sous-matrice, et comporte des pixels, à chaque pixel étant associé un rang correspondant à une position du pixel dans la sous-matrice ;

- le réseau optique est configuré pour former des vues dans le plan image, chaque vue étant formée par des projections de pixels de même rang et situés dans différentes zones élémentaires;

- chaque zone élémentaire s'étend autour d'un centre;

- chaque élément de séparation optique est associé à une zone élémentaire, et s'étend autour d'un centre élémentaire, chaque élément de séparation optique étant disposé, de façon à définir un axe optique, s'étendant entre le centre élémentaire et le centre de la zone élémentaire associée à l'élément de séparation optique;
- les axes optiques des différents éléments de séparation optique convergent en un même point du plan image;

le dispositif étant caractérisé en ce que :

- chaque zone élémentaire s'étend selon une longueur, parallèlement au premier axe longitudinal, et une hauteur, parallèlement au premier axe latéral, la longueur étant strictement supérieure à la hauteur;
- les zones élémentaires sont agencées selon des mailles, chaque maille comportant une zone élémentaire centrale et quatre zones élémentaires lui étant adjacentes, chaque maille étant telle que les centres des zones élémentaires d'une même maille forment une quinconce.

Ainsi, les centres des zones élémentaires d'une même maille suivent une disposition en quinconce orientée par le premier axe longitudinal et le premier axe latéral.

Par quinconce, on entend un arrangement de cinq centres, quatre centres étant arrangés selon les sommets d'un parallélogramme; dont les bords sont parallèles au premier axe latéral et/ou au premier axe longitudinal, le cinquième centre étant disposé au centre du parallélogramme. Le parallélogramme est par exemple un rectangle, et de préférence d'un carré. De préférence, le premier axe longitudinal et le premier axe latéral sont perpendiculaires l'un à l'autre. Ainsi le parallélogramme précédemment indiqué est un rectangle. Il peut également s'agir d'un carré. Les vues peuvent notamment être alignées parallèlement au premier axe longitudinal et au premier axe latéral.

Le nombre de pixels appartenant à une même zone élémentaire est strictement supérieur à 2, et de préférence supérieure à 10 voire supérieur à 100.

Le support d'image peut être un écran, dont les pixels émettent une lumière. Il peut également s'agir d'une affiche.

Le dispositif peut comporter l'une des caractéristiques suivantes, prises isolément ou selon des combinaisons techniquement réalisables :

- Chaque zone élémentaire comporte plus de 2 pixels, et de préférence plus de 5 ou 10 pixels.
- Chaque zone élémentaire est rectangulaire ;
- Les centres des pixels situés à la périphérie de chaque zone élémentaire sont alignés selon les contours d'un parallélogramme ou d'un rectangle.
- Chaque élément de séparation optique présente une section polygonale, et notamment une section carrée ou losange ou hexagonale.
- Chaque élément de séparation optique s'étend selon une section formant un losange ou un carré.
- Au moins une diagonale de chaque élément de séparation optique s'étend respectivement parallèlement au premier axe longitudinal X ou au premier axe latéral Y.
- Des bordures de deux éléments de séparation optique adjacents sont alignées parallèlement :

   à un deuxième axe longitudinal, le deuxième axe longitudinal formant, dans un plan défini par le premier axe longitudinal et le premier axe latéral, un angle aigu par rapport au premier axe longitudinal;
   ou à un deuxième axe latéral, le deuxième axe latéral formant, dans un plan défini par le premier axe longitudinal et le premier axe latéral, un angle aigu par rapport au premier axe latéral

- Chaque élément de séparation optique est une microlentille, de telle sorte que le réseau optique est une matrice de microlentilles. Les microlentilles peuvent alors être jointives les unes des autres.
- Chaque élément de séparation optique est un carré, de telle sorte que le deuxième axe longitudinal est incliné de 45° par rapport au premier axe longitudinal, et que le deuxième axe latéral est incliné de 45° par rapport au premier axe latéral. Autrement dit, chaque élément de séparation optique est un carré, dont les diagonales sont respectivement parallèles au premier axe longitudinal et au premier axe latéral.
- Le dispositif comporte un capteur d'orientation ainsi qu'un microprocesseur pour redéfinir les zones élémentaires en fonction d'une orientation du support d'image.
- Chaque élément de séparation optique est une ouverture formée dans un masque opaque.
- Chaque ouverture est inscrite dans un cercle de diamètre inférieur ou égal à 1 mm.
- Le dispositif est tel que les vues formées respectivement par la projection des pixels des zones élémentaires sont adjacentes et forment un ensemble de vues, formant un champ d'observation utile, s'étendant parallèlement au support d'image, selon une surface rectangulaire.
- L'ensemble des vues s'étend, parallèlement au premier axe longitudinal, selon une longueur et, selon le premier axe latéral, selon une hauteur, la hauteur étant inférieure au deux tiers de la longueur ;
- la hauteur de l'ensemble des vues est de préférence égale, à moins ± 20% près, voire à moins de ± 10% près à la moitié de sa longueur, ce qui constitue une configuration avantageuse.

Un autre objet de l'invention est un procédé d'affichage d'un ensemble de vues sur un plan image, à l'aide d'un dispositif d'affichage selon le premier objet de l'invention, le procédé comportant une génération d'une image sur le support d'image, l'image générée étant décomposée en images élémentaires, de telle sorte que chaque zone élémentaire du support d'image génère une image élémentaire, de façon que chaque vue, formée sur le plan image, corresponde à la projection de pixels de même rang de chaque zone élémentaire.

Le procédé peut comporter les caractéristiques suivantes, prises isolément ou selon les combinaisons techniquement réalisables.

- les pixels d'une même zone élémentaire sont configurés pour afficher l'image élémentaire, correspondant à la zone élémentaire, dans différentes intensités ou différentes couleurs.
- la distance entre le support d'image et le plan image est comprise entre 30 cm et 3 mètres.
- l'ensemble des vues s'étend selon un rectangle, parallèlement au premier axe longitudinal et au premier axe latéral. Le rectangle peut notamment s'étendre parallèlement au premier axe longitudinal, selon une longueur, par exemple comprise entre 70 mm et 200 mm. Il peut s'étendre, parallèlement au premier axe latéral, selon une hauteur inférieure aux deux tiers de la longueur. La hauteur peut correspondre à la moitié de la longueur, à $\pm$ 20% près, voire à moins de $\pm$ 10% près.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A est une coupe schématique d'une partie d'un dispositif selon l'invention, dans un plan XZ défini par un premier axe longitudinal, définissant la longueur d'un écran, et un axe transversal, définissant une distance entre l'écran et un plan image.

La figure 1B est une vue d'une partie de l'écran du dispositif représenté sur la figure 1A. La figure 1B est représentée dans un plan XY défini par le premier axe longitudinal et un premier axe latéral définissant la hauteur de l'écran.

La figure 1C illustre une convergence d'axes optiques, chaque axe optique passant par les centres respectifs d'une zone élémentaire et d'un élément de séparation optique lui étant associé.

Les figures 1D et 1E illustrent la formation de vues, dans un plan image, à partir d'une projection, par des éléments de séparation optique, de pixels situés dans différentes zones élémentaires.

La figure 1F illustre l'alignement des centres respectifs de zones élémentaires de l'écran et d'éléments de séparation d'un réseau optique du dispositif.

Les figures 2A et 2B illustrent un mode de réalisation préféré dans lequel chaque élément de séparation optique est un carré.

Les figures 3A et 3B illustrent des paramètres de dimensionnement d'un dispositif d'affichage.

La figure 4 montre une variante, dans laquelle chaque élément de séparation optique est de forme hexagonale.

La figure 5 montre une variante, dans laquelle chaque élément de séparation optique est une ouverture ménagée dans un masque opaque.

La figure 6 illustre un écran dont les pixels ont une forme losange.

## EXPOSE DE MODES DE REALISATION PARTICULIERS

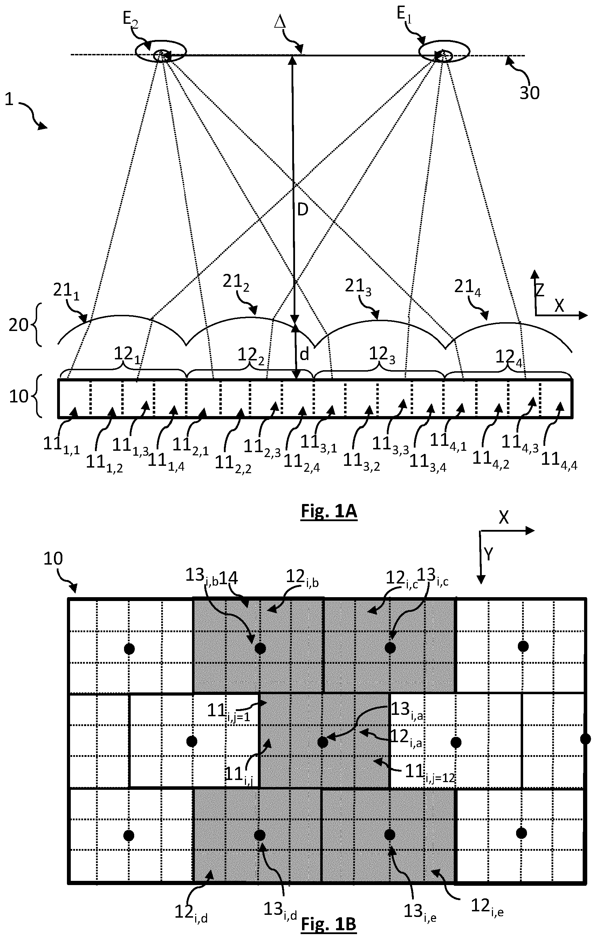

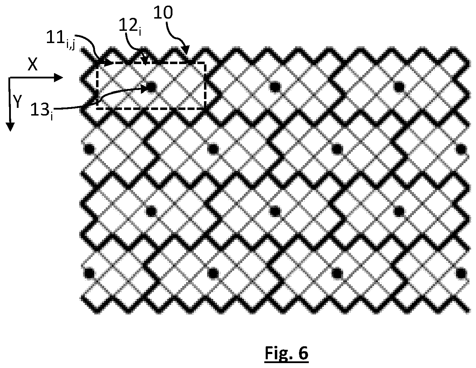

Les figures 1A à 1F schématisent un dispositif d'affichage 1 selon l'invention. Le dispositif comporte un support d'image 10, se présentant sous la forme d'une matrice de pixels $11_{i,j}$. Dans les exemples décrits dans cette description, et de façon non limitative, le support d'image est un écran 10. D'autres exemples de support d'image sont indiqués à la fin de la description. Dans cet exemple, les pixels de l'écran sont carrés. Dans d'autres exemples, ils peuvent prendre d'autres formes géométriques, et par exemple en forme de losange, comme représenté sur le mode de réalisation décrit en lien avec la figure 6. Le dispositif d'affichage 1 comporte également un réseau optique 20, ce dernier étant constitué d'éléments de séparation optique $21_i$ assemblés les uns aux autres. De préférence, les éléments de séparation optique $21_i$ sont assemblés selon un motif régulier. Le réseau optique comporte $I$ éléments de séparation optique, de préférence identiques, reliés les uns aux autres. $I$ est un entier naturel généralement supérieur à 10000, voire supérieur à $110^6$ ou supérieur à $1.10^7$.

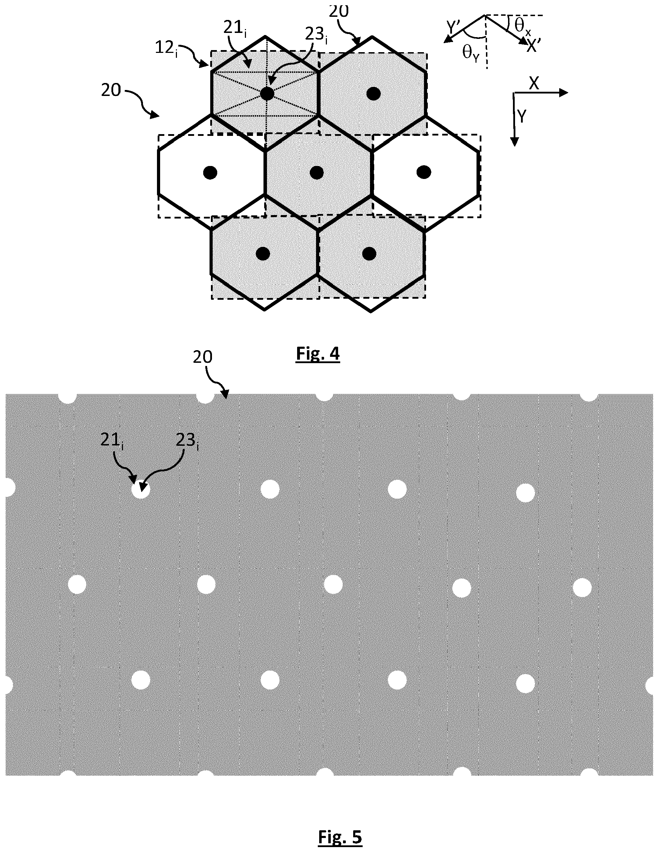

Dans l'exemple représenté sur la figure 1A à 1F, les éléments de séparation optique $21_i$ sont des microlentilles, qui forment un réseau de microlentilles, usuellement désigné par le terme anglosaxon MicroLens Array (MLA). Dans d'autres exemples, les éléments de séparation optique sont des ouvertures pratiquées dans un masque opaque, chaque ouverture formant un diaphragme (ou sténopé). Une telle configuration est décrite en lien avec la figure 5.

L'écran s'étend selon un premier axe longitudinal X, définissant des lignes, et selon un premier axe latéral Y, définissant des colonnes. Le premier axe latéral Y est perpendiculaire au premier axe longitudinal X. La longueur de l'écran, parallèlement à l'axe X, est par exemple comprise entre 10 cm et 2 m, voire davantage. La hauteur de l'écran, parallèlement à l'axe Y, est par exemple comprise entre 5 cm et 1.5 m, voire davantage. L'écran 10 est de préférence de forme rectangulaire.

Les pixels de l'écran sont agencés selon un arrangement matriciel. Chaque pixel de l'écran comporte un centre. Les centres de pixels sont alignés selon des lignes, parallèlement au premier axe longitudinal X, et selon des colonnes, parallèlement au premier axe latéral Y. On retrouve également cet alignement sur le mode de réalisation représenté sur la figure 6.

Dans une des applications visées, l'écran est un écran d'une tablette tactile. Ses dimensions sont par exemple de 200 x 160 mm.

De façon classique dans le domaine des écrans autostéréoscopiques, les pixels $11_{i,j}$ sont virtuellement assemblés en zones élémentaires $12_i$ de pixels, comme représenté sur la figure 1A. L'écran 10 est ainsi segmenté en $I$ zones élémentaires $12_i$ avec $1 \leq i \leq I$. Une zone élémentaire $12_i$ comporte un nombre prédéterminé $J$ de pixels $11_{i,j}$ adjacents. $J$ est un entier strictement supérieur à 2, et de préférence supérieur à 5 ou à 10 voire supérieur à 500. Par exemple, pour une zone élémentaire rectangulaire deux fois plus large que haute, comprenant $n$ pixels en hauteur, $J = 2 \times n^2$

- lorsque $n = 5$, $J = 50$ ;
- lorsque $n = 20$, $J = 800$.

Dans l'exemple représenté sur les figures 1A à 1F, chaque zone élémentaire comporte 12 pixels $11_{i,j}$ répartis selon 3 lignes et 4 colonnes adjacentes. On note que chaque zone élémentaire $12_i$ de pixels $11_{i,j}$ est rectangulaire, la longueur, selon le premier axe longitudinal X, étant supérieure à la hauteur selon le premier axe latéral Y. Lorsque le support d'image est un écran, chaque pixel $II_{ij}$ peut notamment être un pixel physique, défini par des électrodes, le pixel physique correspondant à une surface d'affichage élémentaire de l'écran, configurée pour émettre un signal lumineux considéré comme d'intensité uniforme. D'une façon générale, un pixel d'une image est un point définissant la résolution spatiale de l'image : il s'agit du plus petit élément constitutif d'une image, considéré comme étant de couleur uniforme.

Chaque zone élémentaire $12_i$ correspond à une sous-matrice de la matrice de pixels. Elle est destinée à générer une image élémentaire. Dans chaque zone élémentaire, les pixels sont affectés par un rang j, ce dernier variant entre 1 et $J$. De préférence, chaque zone élémentaire de l'écran comporte un même nombre $J$ de pixels. Sur la figure 1A, on a représenté une ligne d'écran comportant 4 zones élémentaires $12_1$, $12_2$, $12_3$ et $12_4$. Sur cette ligne, on a représenté :

- les pixels $11_{1,1}$, $11_{1,2}$, $11_{1,3}$ et $11_{1,4}$ de la zone élémentaire $12_1$;
- les pixels $11_{2,1}$, $11_{2,2}$, $11_{2,3}$ et $11_{2,4}$ de la zone élémentaire $12_2$;
- les pixels $11_{3,1}$, $11_{3,2}$, $11_{3,3}$ et $11_{3,4}$ de la zone élémentaire $12_3$;
- les pixels $11_{4,1}$, $11_{4,2}$, $11_{4,3}$ et $11_{4,4}$ de la zone élémentaire $12_4$.

Ainsi, la notation $11_{i,j}$ correspond à un pixel de rang j dans une zone élémentaire $12_i$ d'indice i.

Le rang j d'un pixel correspond à la position relative du pixel dans la zone élémentaire $12_i$ à laquelle il appartient. Ainsi, dans l'exemple représenté sur les figures 1A à 1F, le rang j=1 correspond à la position en haut à gauche, tandis que le rang j=12 correspond à la position en bas à droite. Cela est illustré sur la figure 1B.

Le dispositif d'affichage 1 est destiné à être disposé à une distance D d'un utilisateur, selon un axe transversal Z s'étendant perpendiculairement à l'écran 10. Les yeux E1, E2 de l'utilisateur sont situés dans un plan 30, dit plan image, s'étendant parallèlement à l'écran, selon les axes X et Y.

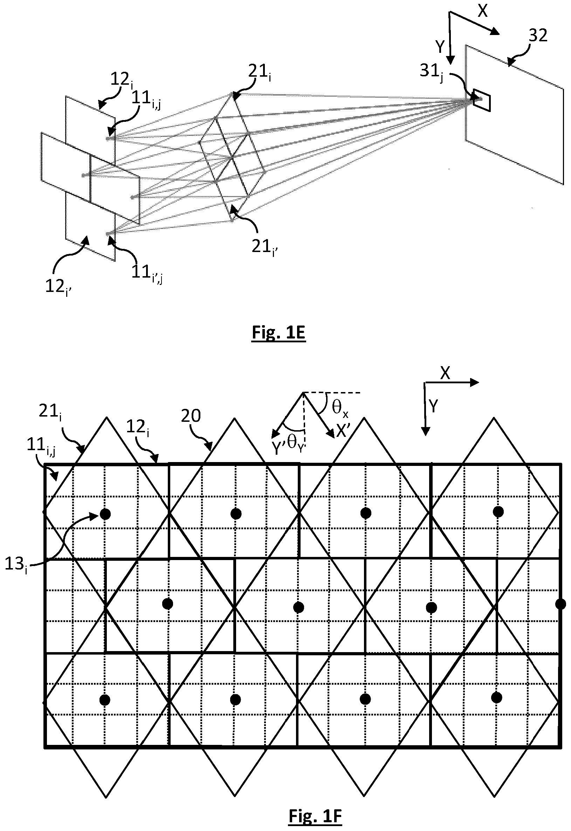

Chaque élément de séparation optique $21_i$ du réseau optique 20 est disposé face à l'écran 10, à une distance d de ce dernier. Chaque élément de séparation optique $21_i$ est affecté d'un indice i, de telle sorte qu'un élément de séparation optique $21_i$ est disposé face à une zone élémentaire $12_i$. Ainsi, chaque zone élémentaire $12_i$ est associée à un élément de séparation optique $21_i$ lui faisant face, comme représenté sur les figures 1A et 1F.

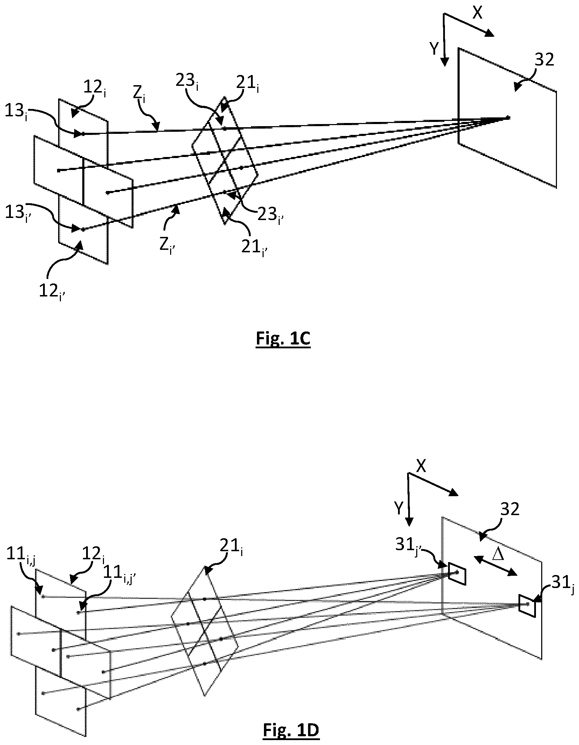

Comme on peut le voir sur les figures 1C et 1D, chaque élément de séparation optique $21_i$ s'étend autour d'un centre optique $23_i$, ou centre élémentaire, se situant au point d'intersection de ses diagonales. Par ailleurs, chaque zone élémentaire $12_i$ s'étend autour d'un centre $13_i$, défini par le point d'intersection de ses diagonales. Sur la figure 1B, on a représenté les centres $13_i$ de chaque zone élémentaire $12_i$. Comme représenté sur la figure 1C, chaque élément de séparation optique $21_i$ est centré par rapport à la zone élémentaire $12_i$ à laquelle il est associé. Par centré, on entend que les centres respectifs $13_i$, $23_i$ d'une zone élémentaire $12_i$ et d'un élément de séparation optique $21_i$ définissent un axe optique $Z_i$. Sur la figure 1C, on a représenté l'intersection de plusieurs axes optiques $Z_i$, $Z_{i'}$ respectivement définis par les centres $13_i$, $13_{i'}$ de zones élémentaires $12_i$, $12_{i'}$ et des centres élémentaires $23_i$, $23_{i'}$ des éléments de séparation optique $21_i$, $21_{i'}$ associés auxdites zones élémentaires. Les axes optiques $Z_i$ respectivement associés aux différents éléments de séparation optique $21_i$ convergent en un même point situé sur le plan image 30.

La fonction d'un élément de séparation optique $21_i$ est de projeter optiquement chaque pixel $II_{ij}$ dans le plan image 30, de façon à former, dans ce dernier, des vues $31_j$ adjacentes les unes des autres, de telle sorte que chaque vue correspond à la superposition des projections des pixels $II_{ij}$ de même rang j et provenant des différentes zones élémentaires $12_i$ de l'écran. Autrement dit, le réseau optique 20 est configuré de telle sorte que chaque élément de séparation optique $21_i$ projette respectivement chaque pixel $11_{i,j}$ dans une vue $31_j$ d'indice j, j correspondant au rang du pixel dans la zone élémentaire à laquelle il appartient. Dans l'exemple représenté sur les figures 1A et 1F, chaque élément de séparation optique $21_i$ est une microlentille, permettant de conjuguer

chaque pixel $11_{i,j}$ de rang j d'une zone élémentaire $21_i$ dans une vue $31_j$ d'indice j. La figure 1E schématise une conjugaison de pixels de même rang j et appartenant à différentes zones élémentaires $12_i$, $12_{i'}$..., ce qui permet de former une vue $31_j$.

Le dispositif d'affichage 1 permet ainsi la formation simultanée de $J$ vues $31_j$ dans le plan image, chaque vue $31_j$ correspondant à une image formée par une projection des pixels $11_{i,j}$ de même rang j de chaque image élémentaire formée au niveau d'une zone élémentaire $12_i$. Si $I$ désigne le nombre de zones élémentaires $12_i$ qui segmentent l'écran 10, et qui sont respectivement associées à un élément de séparation optique élémentaire $21_i$, $I$ correspond également au nombre de pixels respectivement conjugués à chaque vue.

Comme représenté sur la figure 1D, lorsque les yeux E1, E2 d'un observateur sont disposés face au dispositif d'affichage 1, dans le plan image 30, la taille des vues $31_j$ est dimensionnée de telle sorte que le premier œil E1 voit une vue $31_j$, tandis que le deuxième œil E2 voit une vue $31_{j'}$, avec j'≠j. Avantageusement, la taille d'une vue est inscrite dans un diamètre correspondant au diamètre de la pupille d'un œil. Elle est donc inscrite dans un diamètre inférieur à 5 mm, et de préférence inférieur à 3 mm. Selon les principes de la vision stéréoscopique, la vue $31_j$ est différente de la vue $31_{j'}$. Par exemple, au moins deux pixels $21_{i,j}$, $21_{i,j'}$, formant respectivement chaque vue, et compris dans une même zone élémentaire $12_i$, émettent une lumière selon des bandes spectrales différentes. Ainsi, les deux yeux E1 et E2 de l'observateur voient une vue différente, ce qui permet d'obtenir une perception de vision tridimensionnelle. Pour l'observateur, chaque élément de séparation optique (en l'occurrence chaque microlentille) constitue un pixel d'une vue $31_j$ qu'il perçoit au niveau d'un œil. On comprend que la taille de chaque élément de séparation optique conditionne la résolution spatiale de chaque vue $31_j$. La résolution spatiale de chaque vue est donc meilleure lorsque les éléments de séparation optique sont petits. Cependant, chaque élément de séparation optique $21_i$ doit être apte à permettre une projection un nombre élevé de pixels $11_{i,j}$ d'une même zone élémentaire $12_i$ de façon à former $J$ vues différentes $31_j$. La taille de chaque élément de séparation optique résulte donc d'un compromis entre la résolution spatiale de chaque vue $31_j$ et le nombre $J$ de vues différentes formées dans le plan image 30.

Selon un exemple, les pixels $11_{i,j}$ d'une même zone élémentaire $12_i$ émettent une lumière selon une intensité ou une couleur différente, tandis que les pixels $11_{i,j}$ avec $1≤i≤I$ de même rang j formant une même vue $31_j$ émettent une lumière selon une même intensité ou une même couleur.

On comprend de ce qui précède que le nombre de vues $31_j$ dépend du nombre de pixels de chaque zone élémentaire $12_i$. Ainsi, lorsque chaque zone élémentaire comporte $J_x$ pixels selon l'axe X et $J_y$ pixels selon l'axe Y, le dispositif d'affichage permet la formation de $J_x$ vues

selon l'axe X et de $J_y$ vues selon l'axe Y, avec $J_x \times J_y = J$. Dans l'exemple décrit en lien avec les figures 1A à 1F, le dispositif permet l'obtention simultanée de 12 vues $31_j$ ($J$=12), adjacentes les unes des autres, et réparties selon 4 lignes et 3 colonnes.

On remarque que l'invention permet l'obtention d'un ensemble de vues 32 de forme rectangulaire lorsque l'axe X et perpendiculaire à l'axe Y. De façon plus générale, l'ensemble de vues est parallèle au premier axe longitudinal et au premier axe latéral. Cet ensemble de vues forme le champ d'observation utile du dispositif d'affichage 1, c'est-à-dire le champ d'observation dans lequel un observateur peut percevoir une information 3D à partir des vues formées. Sur le plan image 30, les vues $31_j$ sont adjacentes les unes des autres et forment le champ d'observation utile 32, ou domaine de visibilité, usuellement désigné par le terme anglais "head box". Le champ d'observation utile est homothétique de chaque zone élémentaire. Dans l'exemple représenté sur les figures 1A à 1F, le champ d'observation utile est rectangulaire. Sa longueur, selon le premier axe longitudinal X, est supérieure à sa hauteur selon le premier axe latéral Y. Or, le dispositif est conçu pour que l'axe Δ reliant les yeux E1 et E2 de l'observateur soit de préférence parallèle à au premier axe longitudinal X. Les positions respectives des yeux E1 et E2 de l'utilisateur sont davantage susceptibles de se déplacer parallèlement à l'axe X, que parallèlement à l'axe Y. En effet, la plage d'observation d'un utilisateur est plus élevée lorsque l'utilisateur tourne la tête parallèlement à l'axe Δ, que perpendiculairement à l'axe Δ. De ce fait, l'invention permet de maximiser le nombre de vues formées selon l'axe X par rapport aux nombres de vues formées parallèlement à l'axe Y. Le fait de disposer de zones élémentaires $12_i$ rectangulaires permet donc d'optimiser la forme de la head box, c'està-dire du champ d'observation utile 32 formées par le dispositif d'affichage 1 dans le plan image 30.

La distance entre les pupilles d'un observateur, ou écart pupillaire, est généralement proche de 65 mm. L'inventeur a considéré que la forme optimale de la headbox peut être un rectangle de longueur 130 mm selon l'axe X et de hauteur 65 mm selon l'axe Y, ou plus généralement un rectangle dont hauteur (selon l'axe Y) est inférieure aux 2/3 de la longueur (selon l'axe X). Il semble optimal que la hauteur soit sensiblement égale à la moitié de la longueur, le terme sensiblement signifiant à 10% près ou à 20 % près.

Comme précédemment décrit, le nombre $J$ de pixels formant une zone élémentaire $12_i$ correspond aux nombres de vues $31_j$ formées sur le plan image. Il correspond également à un ratio entre la surface de la head box 32 sur la surface de chaque vue élémentaire. Le nombre de pixels formant l'écran étant limité, il est important d'optimiser le nombre de vues formées, en prenant en compte les déplacements potentiels des yeux d'un utilisateur. Une configuration basée sur des zones élémentaires $12_i$ rectangulaires permet d'optimiser la répartition spatiale des vues, en tenant compte du fait que le déplacement des yeux d'un observateur se fait davantage parallèlement à l'axe Δ, c'est-à-dire de droite à gauche (ou de gauche à droite) que perpendiculairement à ce dernier, de haut en bas ou de bas en haut.

Afin d'éviter la formation d'effets de Moiré, les éléments de séparation optique $21_i$ sont alignés selon un deuxième axe longitudinal X' et un deuxième axe latéral Y' respectivement non parallèles au premier axe longitudinal X et au premier axe latéral Y définis par l'écran 10. Plus précisément, les éléments de séparation optique $21_i$ sont disposés de telle sorte que des bordures de deux éléments de séparation optique adjacents sont alignées parallèlement au deuxième axe longitudinal X' ou au deuxième axe latéral Y', comme on peut le voir sur la figure 1F. Cette figure représente l'écran 10 et le réseau optique 20 vus depuis le point de convergence des différents axes optiques $Z_i$, $Z_{i'}$ décrits en lien avec la figure 1C. Dans l'exemple représenté, les éléments de séparation optique ont une forme de losange, dont les diagonales sont respectivement parallèle au premier axe longitudinal X et au premier axe latéral Y de la matrice de pixels formant l'écran. Le fait que les éléments de séparation optique $21_i$ soient losanges constitue un mode préféré de réalisation. Les éléments de séparation optique $21_i$ sont de préférence orientés de telle sorte que deux bordures de deux éléments de séparation optique adjacents sont alignés selon :

- un deuxième axe longitudinal X' formant un angle $\theta_x$ aigu, et par exemple compris entre 10° et 80° par rapport au premier axe longitudinal X ;
- ou un deuxième axe latéral Y' formant un angle $\theta_y$ aigu, et par exemple compris entre 10° et 80° par rapport au premier axe latéral Y.

Un élément important de l'invention est l'agencement des zones élémentaires $12_i$ de l'écran. Cet agencement doit satisfaire à différentes conditions :

- chaque centre $13_i$ d'une zone élémentaire $12_i$ définit un axe $Z_i$ avec le centre $23_i$ de l'élément de séparation optique $21_i$ qui lui est associé, les axes $Z_i$ des zones élémentaires convergeant en un même point du plan image P ;
- chaque zone élémentaire $12_i$ est de forme rectangulaire ;
- des bordures des éléments de séparation optique sont alignées selon des axes X', Y' non parallèles aux axes X, Y définis par l'écran.

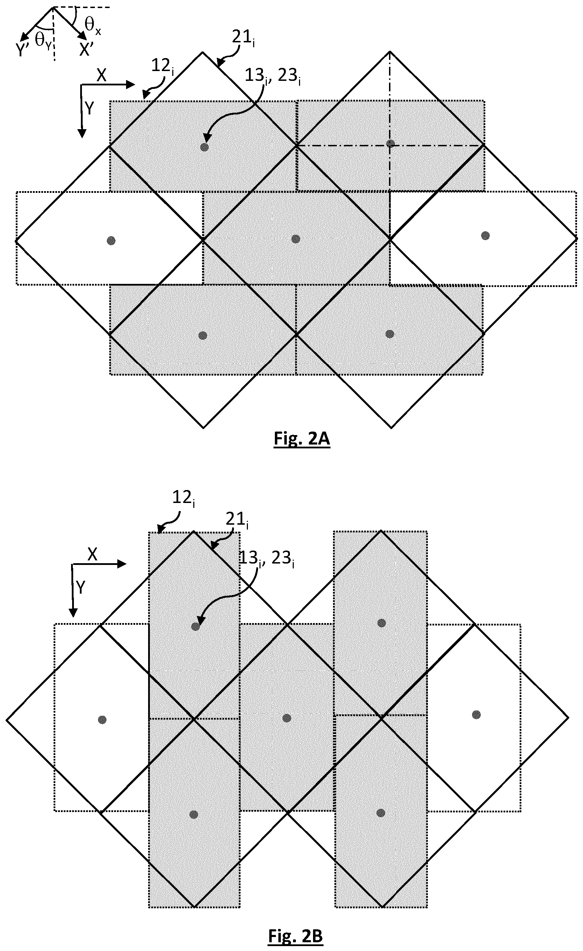

Il est optimal que les zones élémentaires $12_i$ soient alignées selon une disposition d'un mur de briques. Ceci est réalisé en plaçant les centres respectifs des zones élémentaires selon un motif en quinconce. Ainsi, on peut définir une maille 14 de cinq zones élémentaires $12_i$, dont les centres respectifs $13_{i,a}$, $13_{i,b}$, $13_{i,c}$ $13_{i,d}$ et $13_{i,e}$ sont disposés selon une quinconce. La maille 14 comporte une zone élémentaire centrale $12_{i,a}$, de centre $13_{i,a}$ et quatre zones élémentaires adjacentes $12_{i,b}$, $12_{i,c}$ $12_{i,d}$ et $12_{i,e}$, de centres respectifs $13_{i,b}$, $13_{i,c}$ $13_{i,d}$ et $13_{i,e}$, alignés, deux à deux, sur des lignes adjacentes respectivement de part et de la zone élémentaire centrale. La disposition en quinconce est caractérisée par le fait que les centres $13_{i,b}$, $13_{i,c}$ $13_{i,d}$ et $13_{i,e}$ des zones élémentaires adjacentes $12_{i,b}$, $12_{i,c}$ $12_{i,d}$ et $12_{i,e}$ forment les sommets d'un parallélogramme, tandis que le centre $13_{i,a}$ de la zone élémentaire centrale $12_{i,a}$ est disposé au centre du parallélogramme. En fonction de l'orientation relative du premier axe longitudinal X et du premier axe latéral Y, le parallélogramme peut être un rectangle, voire un carré. Une maille élémentaire 14 est représentée en grisé sur la figure 1B, ainsi que sur les figures 2A, 2B et 4. La disposition en quinconce favorise l'agencement des éléments de séparation optique $21_i$. Cela facilite un centrage de chaque élément de séparation optique $21_i$ face à la zone élémentaire $12_i$ à laquelle il est associé. Le réseau optique 20 peut alors comporter des éléments de séparation optique $21_i$ agencés selon un motif régulier. L'agencement en quinconce est particulièrement approprié au mode de réalisation décrit en lien avec les figures 2A et 2B.

Les figures 2A et 2B montrent un mode préféré de réalisation de l'invention. Chaque élément de séparation optique $21_i$ a une forme carrée, ce qui constitue un cas particulier d'une forme losange. Sur la figure 2A, comme précédemment indiqué, les diagonales de chaque élément de séparation optique $21_i$ sont respectivement parallèles au premier axe longitudinal X et au premier axe latéral Y. On a représenté, sur la figure 2A, les deux diagonales d'un élément de séparation optique, sous la forme de traits mixtes. Les bordures de deux éléments de séparation optique adjacent sont alignés selon :

- un deuxième axe longitudinal X' formant un angle $\theta_x$ aigu avec l'axe X, et sensiblement égal à 45° ;
- ou un deuxième axe latéral Y' formant un angle $\theta_Y$ aigu avec l'axe Y, et sensiblement égal à 45°.

Le terme sensiblement égal signifie égal en admettant une tolérance angulaire près, par exemple de ±5°.

Une telle configuration permet de former des zones élémentaires dont la longueur (parallèlement à l'axe X), est deux fois supérieure à la hauteur (parallèlement à l'axe Y). La longueur de chaque zone élémentaire $12_i$ correspond, à un facteur homothétique près, à une diagonale du carré formant l'élément de séparation optique $21_i$ à laquelle elle est associée. Cela permet également d'obtenir une zone d'observation 32 (head box) dont la longueur est deux fois supérieure à la hauteur. L'inventeur a considéré qu'un tel ratio était particulièrement adapté à une utilisation dans laquelle l'écran est l'écran d'une tablette ou d'un téléviseur.

Un autre avantage de cette configuration est que lorsque l'écran est pivote d'un angle de 90°, les zo-

nes élémentaires 12$_i$ peuvent être reconfigurées, comme cela est représenté sur la figure 2B. La reconfiguration permet de maintenir une head box 32 dont la hauteur (dans cette configuration, selon l'axe X) est deux fois supérieure à la longueur (selon l'axe Y). Le fait de pivoter l'écran de 90° peut être une fonctionnalité utile lorsque ce dernier est l'écran d'une tablette maintenue dans les mains de l'utilisateur. Dans ce cas, la tablette comporte une unité de traitement, reliée à un capteur d'orientation, pour permettre la configuration des zones élémentaires en fonction de l'orientation de l'écran.

L'inventeur a dimensionné un exemple de dispositif d'affichage dans lequel les éléments de séparation optique sont des microlentilles carrées, comme représenté sur la figure 2A. Ce dispositif d'affichage permet d'obtenir un champ d'observation utile (head box) de forme rectangulaire, de longueur $\Delta x$ = 90 mm et de hauteur $\Delta y$ = 45 mm. L'ensemble de vues 32 comporte $J_x$ = 38 vues selon la direction longitudinale X et $J_Y$ =19 vues selon l'axe Y. Chaque vue est un carré de 2.7 mm selon l'axe X et 2.7 mm selon l'axe Y.

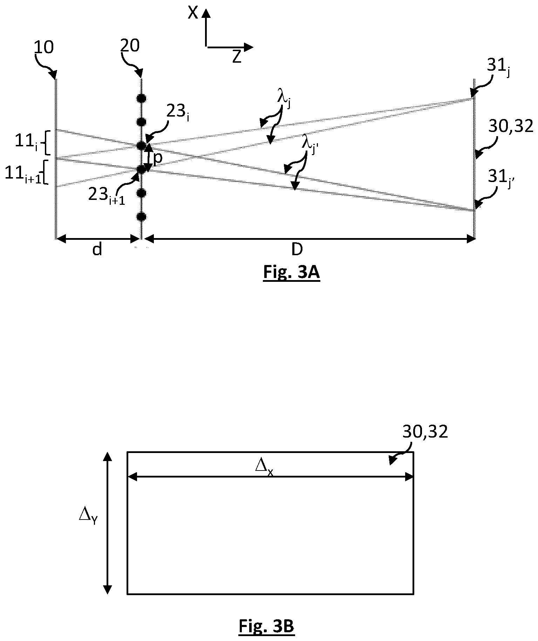

On considère un écran 10 rectangulaire, de dimensions 200 mm x 160 mm et un réseau optique 20 de même taille. Le réseau optique 20 est formé par des microlentilles carrées de côté 350 $\mu$m formant une matrice de microlentilles. Chaque lentille est agencée de telle sorte que ses diagonales sont respectivement parallèles au premier axe longitudinal X et au premier axe latéral Y de l'écran. Deux centres 23$_i$, 23$_{i+1}$ de deux microlentilles adjacentes sont espacés d'un pas p=495 $\mu$m. La distance focale $f$ de chaque lentille est égale à D/$\Delta x$ = 500/90 =2.75 mm. Cf. figures 3A et 3B.

La distance D entre l'observateur, c'est-à-dire le plan image 30, et la matrice de microlentilles 20, est fixée à 500 mm.

La distance d entre la matrice de microlentilles 20 et l'écran 10 est calculée selon l'équation :

$$x = f \left(1 + \frac{f}{D-f}\right) = 2.76 \text{ mm}$$

Le grandissement entre l'ensemble des vues 32 (head-box) et l'écran est :

$$g = \frac{D}{x} = 180$$

Le pas des pixels sur l'écran est donc de 2.37 / $g$ = 13.1 $\mu$m.

Compte tenu des dimensions de l'écran, cela suppose 15267 pixels selon la direction X et 12213 pixels selon la direction Y, soit 186 445 871 pixels. Un tel écran est réalisé en associant 36 microécrans suivant une matrice de 6 lignes et 6 colonnes.

Dans les exemples qui précèdent, les lentilles 21$_i$ sont des losanges, le carré étant un cas particulier d'un losange.

Selon d'autres modes de réalisation, les lentilles, ou de façon plus générale les éléments de séparation optique 21$_i$, peuvent avoir une forme hexagonale, comme illustré sur la figure 4.

Lorsqu'un élément de séparation optique a une forme hexagonale, le centre de l'élément de séparation optique correspond à l'intersection d'au moins trois diagonales, l'intersection étant non confondue avec un sommet de l'hexagone. Sur la figure 4, on a représenté, en pointillés, trois diagonales d'un hexagone dont l'intersection est commune et n'est pas confondue avec un sommet. Sur la figure 4, on a représenté, en pointillés, des zones élémentaires 12$_i$ de l'écran. L'hexagone est de préférence un hexagone régulier. Lorsqu'un élément de séparation optique 21$_i$ a une forme hexagonale, au moins une diagonale de l'élément de séparation optique est de préférence parallèle au premier axe longitudinal X ou au premier axe latéral Y. De préférence, l'élément de séparation optique présente deux diagonales respectivement parallèles à l'axe longitudinal X et à l'axe latéral Y. Sur la figure 4, on a représenté, également en pointillés, des diagonales respectivement parallèles à l'axe X et à l'axe Y.

Selon un autre mode de réalisation, le réseau optique 20 est constitué d'un masque opaque dans lequel sont ménagées des ouvertures 21$_i$, dont le centre 23$_i$ est aligné par rapport au centre 13$_i$ d'une zone élémentaire 12$_i$. Chaque ouverture forme un élément de séparation optique 21$_i$ de type diaphragme ou sténopé. La taille et l'espacement des ouvertures dépend de la distance D entre l'utilisateur et le réseau optique 20. Il est préférable que l'écart angulaire entre deux ouvertures adjacentes soit inférieur à 1 mrad (milliradian). Il est préférable que le diamètre de chaque ouverture soit au moins 5 fois inférieur à l'espacement entre les trous. Un tel réseau optique 20 présente une profondeur de champ infinie, mais la quantité de lumière projetée sur le plan image 30 est moins importante qu'en utilisant une matrice de microlentilles. Un tel réseau optique est représenté sur la figure 5. On peut augmenter le rendement de collecte de la lumière en disposant une microlentille au niveau de chaque ouverture. Le réseau optique comporte alors des microlentilles distantes les unes des autres.

Selon un mode de réalisation, représenté sur la figure 6, les pixels 11$_{i,j}$ de l'écran sont inscrits dans des losanges, alignés selon le premier axe longitudinal X et selon le premier axe latéral Y.

Selon une telle configuration, chaque zone élémentaire 12$_i$ comporte des pixels périphériques, dont les centres respectifs sont alignés au contour d'un rectangle. Un tel rectangle est représenté en pointillés sur la figure 6.

Bien que décrite en lien avec un écran de type tablette portable, l'invention peut s'appliquer à des dispositifs de plus grande dimension, par exemple des écrans de téléviseurs ou de cinéma. La longueur de l'écran, selon l'axe longitudinal X, peut alors dépasser 1 mètre, voire 10 mètres, la hauteur étant ajustée en fonction du format de l'écran.

Par ailleurs, dans les exemples discutés ci-dessus, on a décrit un écran formant un support d'image. Selon d'autres modes de réalisation, le support d'image peut être tout moyen permettant l'affichage d'une image. Il peut s'agir d'un panneau imprimé, par exemple un poster, ou d'un écran recevant une image projetée par un projecteur. Dans ce cas, les pixels peuvent être de taille très petite, par exemple inférieure à 1 $\mu$m². Il peut également s'agir d'un support sur lequel on a appliqué un revêtement, par exemple une peinture. Dans ce cas, le support peut être une paroi, ou une surface d'un objet du quotidien, par exemple un objet décoratif, ou un panneau de signalisation.

**Revendications**

1. Dispositif d'affichage (1), comportant un support d'image (10) formé d'une matrice de pixels ($11_{i,j}$), chaque pixel s'étendant autour d'un centre, la matrice étant telle que des centres de pixels s'étendent selon des lignes, parallèlement à un premier axe longitudinal (X) et selon des colonnes, parallèlement à un premier axe latéral (Y), le support d'image étant disposé face à un réseau optique (20), le dispositif étant tel que:

- le support d'image est segmenté en zones élémentaires ($12_i$), à chaque zone élémentaire correspondant un nombre prédéterminé de pixels adjacents ($11_{i,j}$), chaque zone élémentaire étant configurée pour afficher une image élémentaire ;
- le réseau optique (20) comporte des éléments de séparation optique ($21_i$), chaque élément de séparation optique étant configuré pour projeter les pixels ($11_{i,j}$) dans un plan image (30), distant du support d'image, et parallèle à ce dernier ;
- chaque zone élémentaire forme une sous-matrice, et comporte des pixels ($11_{i,j}$), à chaque pixel étant associé un rang (j) correspondant à une position du pixel dans la sous-matrice ;
- le réseau optique est configuré pour former des vues ($31_j$) dans le plan image (30), chaque vue étant formée par des projection de pixels ($11_{i,j}$) de même rang (j) et situés dans différentes zones élémentaires ($12_i$);
- chaque zone élémentaire s'étend autour d'un centre ($13_i$) ;
- chaque élément de séparation optique ($21_i$) est associé à une zone élémentaire ($12_i$), et s'étend autour d'un centre élémentaire ($23_i$), chaque élément de séparation optique étant disposé de façon à définir un axe optique ($Z_i$), s'étendant entre le centre élémentaire ($23_i$) et le centre de la zone élémentaire ($12_i$) associée à l'élément de séparation optique;
- les axes optiques ($Z_i$) des différents éléments de séparation optique ($21_i$) convergent en un même point du plan image (30);

le dispositif étant **caractérisé en ce que** :

- chaque zone élémentaire ($12_i$) s'étend selon une longueur, parallèlement au premier axe longitudinal, et une hauteur, parallèlement au premier axe latéral, la longueur étant strictement supérieure à la hauteur;
- les zones élémentaires sont agencées selon des mailles (14), chaque maille comportant une zone élémentaire centrale et quatre zones élémentaires lui étant adjacentes, chaque maille étant telle que les centres des zones élémentaires d'une même maille forment une quinconce.

2. Dispositif selon la revendication 1, dans lequel chaque zone élémentaire ($12_i$) comporte plus de 2 pixels, et de préférence plus de 5 ou 10 pixels.

3. Dispositif selon l'une quelconque des revendications précédentes, dans lequel chaque zone élémentaire ($12_i$) est rectangulaire et/ou dans lequel les centres des pixels situés à la périphérie de chaque zone élémentaire sont alignés selon les contours d'un rectangle.

4. Dispositif selon l'une quelconque des revendications précédentes, dans lequel chaque élément de séparation optique ($21_i$) présente une section polygonale, et notamment une section carrée ou losange ou hexagonale.

5. Dispositif selon la revendication 4 dans lequel au moins une diagonale chaque élément de séparation optique ($21_i$) s'étend respectivement parallèlement au premier axe longitudinal X ou au premier axe latéral Y.

6. Dispositif selon l'une quelconque des revendications précédentes, dans lequel des bordures de deux éléments de séparation optique adjacents sont alignées parallèlement :

- à un deuxième axe longitudinal (X'), le deuxième axe longitudinal formant, dans un plan défini par le premier axe longitudinal (X) et le premier axe latéral (Y), un angle ($\theta_X$) aigu par rapport au premier axe longitudinal (X) ;
- ou à un deuxième axe latéral (Y'), le deuxième axe latéral formant, dans un plan défini par le premier axe longitudinal (X) et le premier axe latéral (Y), un angle ($\theta_Y$) aigu par rapport au premier axe latéral (Y).

**7.** Dispositif selon la revendication 6, dans lequel chaque élément de séparation optique est un carré, de telle sorte que le deuxième axe longitudinal (X') est incliné de 45° par rapport au premier axe longitudinal (X), et que le deuxième axe latéral (Y') est incliné de 45° par rapport au premier axe latéral (Y).

**8.** Dispositif selon l'une quelconque des revendications précédentes, dans lequel chaque élément de séparation optique ($21_i$) est une microlentille, de telle sorte que le réseau optique (20) est une matrice de microlentilles.

**9.** Dispositif selon l'une quelconque des revendications 1 à 6, dans lequel chaque élément de séparation optique ($21_i$) est une ouverture formée dans un masque opaque.

**10.** Dispositif selon la revendication 9, dans lequel chaque ouverture est inscrite dans un cercle de diamètre inférieur ou égal à 1 mm.

**11.** Dispositif selon l'une quelconque des revendications précédentes, dans lequel les vues ($31_j$) formées respectivement par la projection des pixels ($11_{i,j}$) des zones élémentaires ($12_i$) sont adjacentes et forment un ensemble de vues (32), formant un champ d'observation utile, s'étendant parallèlement au support d'image (10), selon une surface rectangulaire.

**12.** Dispositif selon la revendication 11 configuré de telle sorte que l'ensemble des vues (32) s'étend, parallèlement au premier axe longitudinal (X), selon une longueur et, selon le premier axe latéral (Y), selon une hauteur, la hauteur étant de préférence inférieure au deux tiers de la longueur.

**13.** Dispositif selon la revendication 12, configuré de telle sorte que la hauteur de l'ensemble des vues (32) est égale, à moins ± 20% près, à la moitié de sa longueur.

**14.** Procédé d'affichage d'un ensemble de vues (32) sur un plan image (30), à l'aide d'un dispositif d'affichage (1) selon l'une quelconque des revendications précédentes, le procédé comportant une génération d'une image sur le support d'image, l'image générée étant décomposée en images élémentaires, de telle sorte que chaque zone élémentaire ($12_i$) du support d'image génère une image élémentaire, de façon que chaque vue ($31_j$), formée sur le plan image, corresponde à la projection de pixels ($11_{i,j}$) de même rang (j) de chaque zone élémentaire.

**15.** Procédé selon la revendication 14 dans lequel les pixels ($11_{i,j}$) d'une même zone élémentaire ($12_i$) sont configurés pour afficher l'image élémentaire, correspondant à la zone élémentaire, dans différentes intensités ou différentes couleurs.

**16.** Procédé selon l'une quelconque des revendications 14 ou 15 dans lequel la distance entre le support d'image (10) et le plan image (30) est comprise entre 30 cm et 3 mètres.

**17.** Procédé selon l'une quelconque des revendications 14 à 16, dans lequel l'ensemble des vues (32), s'étend selon un rectangle, parallèlement au premier axe longitudinal (X) et au premier axe latéral (Y).

**18.** Procédé selon la revendication 17, dans lequel le rectangle s'étend :

- parallèlement au premier axe longitudinal (X), selon une longueur, par exemple comprise entre 70 mm et 200 mm ;
- parallèlement au premier axe latéral (Y), selon une hauteur inférieure aux deux tiers de la longueur.

**Patentansprüche**

**1.** Anzeigevorrichtung (1), die einen Bildträger (10) umfasst, der durch eine Pixelmatrix ($11_{i,j}$) gebildet ist, wobei sich jedes Pixel um eine Mitte erstreckt, wobei die Matrix dergestalt ist, dass sich Pixelmitten gemäß Zeilen parallel zu einer ersten Längsachse (X) und gemäß Spalten parallel zu einer ersten Querachse (Y) erstrecken, wobei der Bildträger gegenüber einem optischen Array (20) angeordnet ist, wobei die Vorrichtung dergestalt ist, dass:

- der Bildträger in Elementarbereiche ($12_i$) unterteilt ist, wobei jedem Elementarbereich eine vorgegebene Anzahl von benachbarten Pixeln ($11_{i,j}$) entspricht, wobei jeder Elementarbereich dazu konfiguriert ist, ein Elementarbild anzuzeigen;
- das optische Array (20) optische Trennelemente ($21_i$) umfasst, wobei jedes optische Trennelement dazu konfiguriert ist, die Pixel ($11_{i,j}$) auf eine Bildebene (30) zu projizieren, die von dem Bildträger entfernt und zu diesem parallel ist;
- jeder Elementarbereich eine Untermatrix bildet und Pixel ($11_{i,j}$) umfasst, wobei mit jedem Pixel ein Rang (j) assoziiert ist, der einer Position des Pixels in der Untermatrix entspricht;
- das optische Array dazu konfiguriert ist, Ansichten ($31_j$) in der Bildebene (30) zu bilden, wobei jede Ansicht durch Projektionen von Pixeln ($11_{i,j}$) desselben Ranges (j), die sich in unterschiedlichen Elementarbereichen ($12_i$) befinden, gebildet wird;
- sich jeder Elementarbereich um eine Mitte ($13_i$) erstreckt;

- jedes optische Trennelement ($21_i$) mit einem Elementarbereich ($12_i$) assoziiert ist und sich um eine Elementarmitte ($23_i$) erstreckt, wobei jedes optische Trennelement so angeordnet ist, dass eine optische Achse ($Z_i$) definiert wird, die sich zwischen der Elementarmitte ($23_i$) und der Mitte des Elementarbereichs ($12_i$), der mit dem optischen Trennelement assoziiert ist, erstreckt;
- die optischen Achsen ($Z_i$) der unterschiedlichen optischen Trennelemente ($21_i$) in einem gleichen Punkt der Bildebene (30) konvergieren;

wobei die Vorrichtung **dadurch gekennzeichnet ist, dass**:

- sich jeder Elementarbereich ($12_i$) gemäß einer Länge parallel zu der ersten Längsachse und einer Höhe parallel zu der ersten Querachse erstreckt, wobei die Länge in jedem Fall größer als die Höhe ist;
- die Elementarbereiche gemäß Maschen (14) eingerichtet sind, wobei jede Masche einen mittigen Elementarbereich und vier dazu benachbarte Elementarbereiche umfasst, wobei jede Masche dergestalt ist, dass die Mitten der Elementarbereiche einer gleichen Masche eine Fünfpunktanordnung bilden.

2. Vorrichtung nach Anspruch 1, wobei jeder Elementarbereich ($12_i$) mehr als 2 Pixel und vorzugsweise mehr als 5 oder 10 Pixel umfasst.

3. Vorrichtung nach einem der vorhergehenden Ansprüche, wobei jeder Elementarbereich ($12_i$) rechteckig ist und/oder wobei die Mitten der Pixel, die sich am Umfang jedes Elementarbereichs befinden, gemäß den Konturen eines Rechtecks ausgerichtet sind.

4. Vorrichtung nach einem der vorhergehenden Ansprüche, wobei jedes optische Trennelement ($21_i$) einen polygonalen Querschnitt und insbesondere einen quadratischen oder rautenförmigen oder sechseckigen Querschnitt aufweist.

5. Vorrichtung nach Anspruch 4, wobei sich mindestens eine Diagonale jedes optischen Trennelements ($21_i$) jeweils parallel zu der ersten Längsachse X oder zu der ersten Querachse Y erstreckt.

6. Vorrichtung nach einem der vorhergehenden Ansprüche, wobei Ränder von zwei benachbarten optischen Trennelementen parallel zu Folgendem ausgerichtet sind:

- einer zweiten Längsachse (X'), wobei die zweite Längsachse in einer Ebene, die durch die erste Längsachse (X) und die erste Querachse (Y) definiert wird, mit Bezug auf die erste Längsachse (X) einen spitzen Winkel ($\theta_x$) bildet;
- oder einer zweiten Querachse (Y'), wobei die zweite Querachse in einer Ebene, die durch die erste Längsachse (X) und die erste Querachse (Y) definiert wird, mit Bezug auf die erste Querachse (Y) einen spitzen Winkel ($\theta_y$) bildet.

7. Vorrichtung nach Anspruch 6, wobei jedes optische Trennelement ein Quadrat ist, sodass die zweite Längsachse (X') mit Bezug auf die erste Längsachse (X) um 45° geneigt ist und die zweite Querachse (Y') mit Bezug auf die erste Querachse (Y) um 45° geneigt ist.

8. Vorrichtung nach einem der vorhergehenden Ansprüche, wobei jedes optische Trennelement ($21_i$) eine Mikrolinse ist, sodass das optische Array (20) eine Matrix aus Mikrolinsen ist.

9. Vorrichtung nach einem der Ansprüche 1 bis 6, wobei jedes optische Trennelement ($21_i$) eine Öffnung ist, die in einer lichtundurchlässigen Maske gebildet ist.

10. Vorrichtung nach Anspruch 9, wobei sich jede Öffnung innerhalb eines Kreises mit einem Durchmesser kleiner als oder gleich 1 mm befindet.

11. Vorrichtung nach einem der vorhergehenden Ansprüche, wobei die Ansichten ($31_j$), die jeweils durch die Projektion der Pixel ($11i;j$) der Elementarbereiche ($12_i$) gebildet werden, benachbart sind und eine Gesamtheit von Ansichten (32) bilden, welche ein nutzbares Sehfeld bildet, das sich gemäß einer rechteckigen Fläche parallel zu dem Bildträger (10) erstreckt.

12. Vorrichtung nach Anspruch 11, die so konfiguriert ist, dass sich die Gesamtheit von Ansichten (32) gemäß einer Länge parallel zu der ersten Längsachse (X) und gemäß einer Höhe gemäß der ersten Querachse (Y) erstreckt, wobei die Höhe vorzugsweise weniger als zwei Drittel der Länge beträgt.

13. Vorrichtung nach Anspruch 12, die so konfiguriert ist, dass die Höhe der Gesamtheit von Ansichten (32), auf weniger als $\pm$ 20 % genau, gleich der Hälfte ihrer Länge ist.

14. Verfahren zum Anzeigen einer Gesamtheit von Ansichten (32) auf einer Bildebene (30) mit Hilfe einer Anzeigevorrichtung (1) nach einem der vorhergehenden Ansprüche, wobei das Verfahren eine Erzeugung eines Bildes auf dem Bildträger umfasst, wobei das erzeugte Bild in Elementarbilder zerlegt wird, sodass jeder Elementarbereich ($12_i$) des Bild-

trägers ein Elementarbild erzeugt, sodass jede Ansicht ($31_j$), die in der Bildebene gebildet wird, der Projektion von Pixeln (11i;j) desselben Ranges (j) jedes Elementarbereichs entspricht.

15. Verfahren nach Anspruch 14, wobei die Pixel (11i;j) eines gleichen Elementarbereichs ($12_i$) dazu konfiguriert sind, das Elementarbild, das dem Elementarbereich entspricht, mit unterschiedlichen Intensitäten oder unterschiedlichen Farben anzuzeigen.

16. Verfahren nach einem der Ansprüche 14 oder 15, wobei der Abstand zwischen dem Bildträger (10) und der Bildebene (30) zwischen 30 cm und 3 Metern liegt.

17. Verfahren nach einem der Ansprüche 14 bis 16, wobei sich die Gesamtheit von Ansichten (32) gemäß einem Rechteck parallel zu der ersten Längsachse (X) und zu der ersten Querachse (Y) erstreckt.

18. Verfahren nach Anspruch 17, wobei sich das Rechteck folgendermaßen erstreckt:

- parallel zu der ersten Längsachse (X) gemäß einer Länge, die beispielsweise zwischen 70 mm und 200 mm liegt;
- parallel zu der ersten Querachse (Y) gemäß einer Höhe, die weniger als zwei Drittel der Länge beträgt.

**Claims**

1. Displaying device (1) comprising an image medium (10) formed from a matrix array of pixels ($11_{i,j}$), each pixel extending around a center, the matrix array being such that the centers of the pixels extend in rows, parallel to a first longitudinal axis (X), and in columns, parallel to a first lateral axis (Y), the image medium being placed facing an optical array (20), the device being such that:

- the image medium is segmented into elementary zones ($12_i$), a preset number of adjacent pixels ($11_{i,j}$) corresponding to each elementary zone, each elementary zone being configured to display an elementary image;
- the optical array (20) comprises optical separating elements ($21_i$), each optical separating element being configured to project the pixels ($11_{i,j}$) into an image plane (30), which is distant from the image medium and parallel to the latter;
- each elementary zone forms a matrix subarray and comprises pixels ($11_{i,j}$), each pixel being associated with a rank (j) corresponding to a position of the pixel in the matrix subarray;
- the optical array is configured to form views ($31_j$) in the image plane (30), each view being formed by projections of pixels ($11_{i,j}$) of the same rank (j) and located in various elementary zones ($12_i$);
- each elementary zone extends around a center ($13_i$);
- each optical separating element ($21_i$) is associated with one elementary zone ($12_i$), and extends about an elementary center ($23_i$), each optical separating element being placed so as to define an optical axis ($Z_i$), extending between the elementary center (23i) and the center of the elementary zone ($12_i$) associated with the optical separating element;
- the optical axes ($Z_i$) of the various optical separating elements ($21_i$) converge on a given point of the image plane (30);

the device being **characterized in that**:

- each elementary zone ($12_i$) extends over a length, parallel to the first longitudinal axis, and a height, parallel to the first lateral axis, the length being strictly larger than the height;
- the elementary zones are arranged in unit cells (14), each unit cell comprising a central elementary zone and four elementary zones that are adjacent thereto, each unit cell being such that the centers of the elementary zones of a given unit cell are staggered.

2. Device according to Claim 1, wherein each elementary zone ($12_i$) comprises more than 2 pixels, and preferably more than 5 or 10 pixels.

3. Device according to either one of the preceding claims, wherein each elementary zone ($12_i$) is rectangular and/or wherein the centers of the pixels located on the periphery of each elementary zone are aligned with the outlines of a rectangle.

4. Device according to any one of the preceding claims, wherein each optical separating element ($21_i$) has a polygonal cross section, and in particular a square or rhombus or hexagonal cross section.

5. Device according to Claim 4, wherein at least one diagonal of each optical separating element ($21_i$) respectively extends parallel to the first longitudinal axis X or to the first lateral axis Y.

6. Device according to any one of the preceding claims, wherein borders of two adjacent optical separating elements are aligned parallel:

- to a second longitudinal axis (X'), the second longitudinal axis making, in a plane defined by the first longitudinal axis (X) and the first lateral axis (Y), an acute angle ($\theta_X$) to the first longitudinal axis (X);

■ or to a second lateral axis (Y'), the second lateral axis making, in a plane defined by the first longitudinal axis (X) and the first lateral axis (Y), an acute angle ($\theta_Y$) to the first lateral axis (Y).

7. Device according to Claim 6, wherein each optical separating element is a square, such that the second longitudinal axis (X') is inclined by 45° to the first longitudinal axis (X), and such that the second lateral axis (Y') is inclined by 45° to the first lateral axis (Y).

8. Device according to any one of the preceding claims, wherein each optical separating element ($21_i$) is a microlens, such that the optical array (20) is a microlens matrix array.

9. Device according to any one of Claims 1 to 6, wherein each optical separating element ($21_i$) is an aperture formed in an opaque mask.

10. Device according to Claim 9, wherein each aperture is inscribed in a circle of a diameter smaller than or equal to 1 mm.

11. Device according to any one of the preceding claims, wherein the views ($31_j$) respectively formed by the projection of the pixels ($11_{i,j}$) of the elementary zones ($12_i$) are adjacent and form a set of views (32), forming a head box, extending parallel to the image medium (10), in a rectangular area.

12. Device according to Claim 11, configured such that the set of views (32) extends parallel to the first longitudinal axis (X), over a length and, along the first lateral axis (Y), over a height, the height preferably being smaller than two thirds of the length.

13. Device according to Claim 12, configured such that the height of the set of views (32) is equal, to within less than ± 20%, to half its length.

14. Method for displaying a set of views (32) on an image plane (30), using a displaying device (1) according to any one of the preceding claims, the method comprising generating an image on the image medium, the generated image being decomposed into elementary images, such that each elementary zone (12i) of the image medium generates an elementary image, so that each view ($31_j$), formed on the image plane, corresponds to the projection of pixels ($11_{i,j}$) of same rank (j) of each elementary zone.

15. Method according to Claim 14, wherein the pixels ($11_{i,j}$) of a given elementary zone ($12_i$) are configured to display the elementary image, corresponding to the elementary zone, with various brightnesses or various colours.

16. Method according to either one of Claims 14 and 15, wherein the distance between the image medium (10) and the image plane (30) is comprised between 30 cm and 3 meters.

17. Method according to any one of Claims 14 to 16, wherein the set of views (32) extend, in a rectangle, parallel to the first longitudinal axis (X) and to the first lateral axis (Y).

18. Method according to Claim 17, wherein the rectangle extends:

- parallel to the first longitudinal axis (X), over a length, which is for example comprised between 70 mm and 200 mm;
- parallel to the first lateral axis (Y), over a height that is smaller than two thirds of the length.

**Fig. 1A**

**Fig. 1B**

**Fig. 1C**

**Fig. 1D**

**Fig. 1E**

**Fig. 1F**

Fig. 2A

Fig. 2B

**Fig. 3A**

**Fig. 3B**

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0697161 A

- WO 9820392 A

**Littérature non-brevet citée dans la description**

- **SON J.Y.** Characteristics of pixel arrangements in various rhombuses for full-parallax three-dimensional system. *Applied Optics,* Avril 2006, vol. 45 (12